# EUROPÄISCHE PATENTANMELDUNG

(11) **EP 0 903 069 A1**
(43) Veröffentlichungstag der Anmeldung: **24.03.1999**
(21) Anmeldenummer: 98116934.5
(22) Anmeldetag: 08.09.1998
(51) Int. Cl.: A01C 17/00

(54) **Schleuderstreuer**

(30) Priorität: 22.09.1997 DE 19741652
(71) Anmelder: Amazonen-Werke H. Dreyer GmbH & Co. KG, D-49205 Hasbergen (DE)
(72) Erfinder: Dreyer, Heinz, Dr. Dipl.-Ing., 49205 Hasbergen (DE)

(57) **Zusammenfassung**

Schleuderstreuer zum Verteilen von Düngemitteln und dgl. mit einem Vorratsbehälter, der Dosierelemente für zumindest zwei quer zur Fahrtrichtung und nebeneinander angeordneten Schleuderscheiben aufweist, wobei jede Schleuderscheibe auf einer Antriebswelle angeordnet ist und jeweils eine kürzere und eine längere und/oder vorzugsweise mit verschiedenen Winkeln zur Radialen angestellte Wurfschaufeln aufweist. um eine Vorrichtung zu schaffen, mit der größere Arbeitsbreiten wie bisher unter Verwendung von einfachen Vorrichtungen erreichbar sind, ist vorgesehen, daß die Schleuderscheiben mit einer Drehzahl von 600 bis 800 U/min, vorzugsweise etwa 720 U/min angetrieben werden, daß die Abwurfkante mit der längeren Wurfschaufel einen Umlaufkreis mit einem Radius von 450 bis 600 mm, vorzugsweise ca. 540 mm beschreibt, daß der aufrechte Abwurfwinkel des äußeren Bereiches der längeren Wurfschaufel 10 bis 30°, vorgesehen etwa 22° zur Horizontalen beträgt. Es kann auch vorgesehen sein, daß die äußere Abwurfkante der längeren Wurfschaufel mit einer Umfangsgeschwindigkeit von 30 bis 45 m/sec, vorzugsweise etwa 41 m/sec umläuft, und daß der aufrechte Abwurfwinkel zumindest des äußeren Bereiches der längeren Wurfschfeln 10 bis 30°, vorzugsweise etwa 22° zur Horizontalen beträgt.

## Beschreibung

Der Erfindung betrifft einen Schleuderstreuer gemäß des Oberbegriffes des Patentanspruches 1.

Ein derartiger Schleuderstreuer wird beispielsweise in der EP 02 92 650 B1 beschrieben. Dieser Schleuderstreuer eignet sich für den Einsatz von Arbeitsbreiten von 9-24 m und mehr. In letzter Zeit nimmt in der Landwirtschaft, insbesondere für das Bestreuen von großen Flächen, die Forderung zu, die Flächenleistung zu erhöhen. Die Flächenleistung durch größere Fahrgeschwindigkeiten erreichen zu wollen, bringt nicht den angestrebten Erfolg.

Der Erfindung liegt die Aufgabe zugrunde, eine Vorrichtung zu schaffen, mit der größere Arbeitsbreiten wie bisher unter Verwendung von einfachen Vorrichtungen erreichbar sind.

Diese Aufgabe wird erfindungsgemäß durch die kennzeichenen Merkmale der Ansprüche 1 oder 2 gelöst. Infolge dieser Maßnahmen lassen sich in überraschend einfacher Weise beim Verteilen von Düngemitteln Arbeitsbreiten von 48 m und mehr erzielen. Dadurch, daß durch diese großen möglichen Arbeitsbreiten die Fahrgassen in Abständen von 48 m und mehr angelegt werden können und dann zum Verteilen der Düngemittel befahren werden, lassen bisher nie geahnte Flächenleistungen erzielen.

Als vorteilhaft hat sich hierbei herausgestellt, daß die Schleuderscheibenantriebswellen in einem Abstand von 1,20 m bis 1,80 m, vorzugsweise in einem Abstand von 1,50 m zueinander angeordnet sind. Hierdurch lassen sich sehr große und vorteilhafte Umlaufbahnen der äußeren Enden der auf den Schleuderscheiben angeordneten Wurfschaufeln erzielen, so daß bei relativ niedrigen Drehzahlen sehr hohe Umfangsgeschwindigkeiten an der äußeren Abwurfkante der Wurfschaufeln erreichbar sind, so daß in überraschender Weise die erfindungsgemäß angestrebten Arbeitsbreiten erreicht werden.

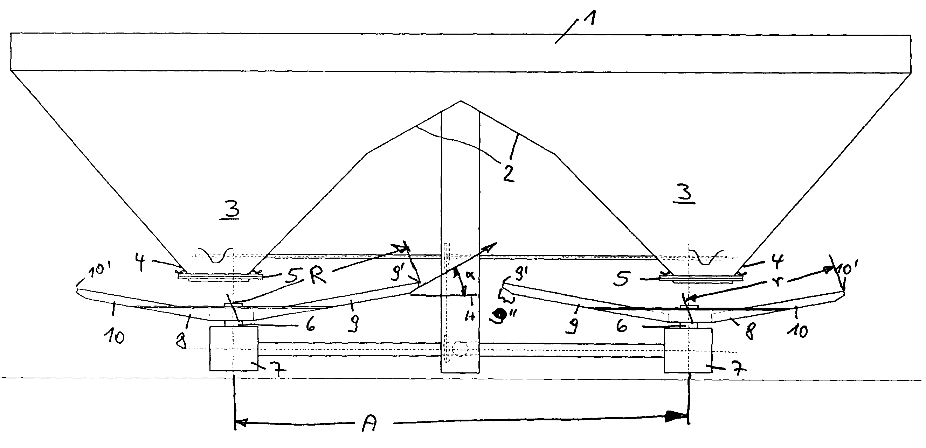

Weitere Einzelheiten der Erfindung sind der Beispielbeschreibung und der Zeichnunge zu entnehmen. Die Zeichnung zeigt
den Schleuderstreuer in der Ansicht von hinten und in Prinzipdarstellung.

Der Schleuderstreuer weist den Vorratsbehälter 1 auf, der an einem der Übersichtlichkeit halber an einem nicht dargestellten Rahmen angeordnet ist. Über diesen Rahmen läßt sich der Schleuderstreuer an den Dreipunktkraftheber eines Ackerschleppers in bekannter Weise ankuppeln. Der Vorratsbehälter 1 ist durch ein dachförmiges Mittelteil 2 in die beiden Auslauftrichter 3 unterteilt. Die unteren Enden 4 der Auslauftrichter 3 werden durch die als Auslauföffnung und Schieber ausgebildeten Dosierorgane 5 verschlossen. Unterhalb der Dosierorgane 5 sind in einem Abstand A (quer zur Fahrtrichtung gemessen) von 1,20 bis 1,80m, vorzugsweise 1,50m die Schleuderscheibenantriebswellen 6, die aus den Gehäusen 7 herausragen, angeordnet. Die Gehäuse 7 sind an dem nicht dargestellten Rahmen des Schleuderstreuers befestigt. Auf den von einer Kraftquelle rotierend angetriebenen Schleuderscheibenantriebswellen 6 sind die Schleuderscheiben 8 mit darauf angeordneten Wunfschaufeln 9 und 10 befestigt. Auf jeder Schleuderscheibe 8 sind eine längere Wurfschaufel 9 und kürzere Wurfschaufel 10 angeordnet. Die Wurfschaufeln 9 und 10 sind in bekannter und daher nicht näher dargestellter Weise in unterschiedlichen Winkeln zur Radialen einstellbar auf den Schleuderscheiben 8 angeordnet. Die Schleuderscheiben 8 werden mit einer Drehzahl von 600 bis 600 U/min., vorzugsweise etwa 720 U/min. angetrieben. Die Abwurfkante 9' der längeren Wunfschaufeln 9 beschreibt einen Umlaufkreis mit einem Radius R von 450 bis 600 mm, vorzugsweise ca. 540 mm, während die Abwurfkante 10' der kürzeren Wurfschaufeln 10 einen Umlaufkreis mit einem Radius r von 350 - 500 mm, vorzugsweise 440 mm beschreibt. Der aufrechte Abwurfwinkel α der äußeren Bereiche 9'' der längeren Wurfschaufel 9 beträgt 10 - 30°, vorzugsweise etwa 22°.

Die äußere Abwurfkante 9' der längeren Wurfschaufeln 9 läuft mit einer Umfangsgeschwindigkeit von 35 - 45 m/sec, vorzugsweise etwa 41 m/sec um, während die äußere Abwurfkante 10' der kürzeren Wunfschaufeln 10 mit einer Umfangsgeschwindigkeit von 28 - 38 m/sec, vorzugsweise mit etwa 33 m/sec umläuft. Aufgrund dieser Parameter können mit dem Schleuderstreuer gleichmäßige Streubilder von 48 m und mehr erzielt werden. Dadurch, daß in einem Abstand von 48 m die einzelnen gelegten Fahrgassen befahren werden können, ergibt sich eine bisher nie gekannte Flächenleistung. Die Schleuderscheibenantriebswellen 6 in einem Abstand A von 1,20 m - 1,80 m, vorzugsweise 1,50 m angeordet. Hierdurch werden die zur Verfügung stehenden Größenverhältnisse optimal ausgenutzt.

## Patentansprüche

1. Schleuderstreuer zum Verteilen von Düngemitteln und dgl. mit einem Vorratsbehälter, der Dosierelemente für zumindest zwei quer zur Fahrtrichtung und nebeneinander angeordneten Schleuderscheiben aufweist, wobei jede Schleuderscheibe auf einer Antriebswelle angeordnet ist und jeweils eine kürzere und eine längere und/oder vorzugsweise mit verschiedenen Winkeln zur Radialen angestellte Wurfschaufeln aufweist, dadurch gekennzeichnet, daß die Schleuderscheiben (8) mit einer Drehzahl von 600 bis 800 U/min, vorzugsweise etwa 720 U/min angetrieben werden, daß die Abwurfkante (9') mit der längeren Wurfschaufel (9) einen Umlaufkreis mit einem Radius (R) von 450 bis 600 mm, vorzugsweise ca. 540 mm beschreibt, daß der aufrechte Abwurfwinkel (α) des äußeren Bereiches (9'') der längeren Wurfschaufel (9) 10 bis 30°, vorzugsweise etwa 22° zur Horizontalen (H) beträgt.

2. Schleuderstreuer zum Verteilen von Düngemitteln und dgl. mit einem Vorratsbehälter, der Dosierelemente für zumindest zwei quer zur Fahrtrichtung und nebeneinander angeordneten Schleuderscheiben aufweist, wobei jede Schleuderscheibe auf einer Antriebswelle angeordnet ist und jeweils eine kürzere und eine längere und/oder vorzugsweise mit verschiedenen Winkeln zur Radialen angestellte Wurfschaufeln aufweist, dadurch gekennzeichnet, daß die äußere Abwurfkante (9') der längeren Wurfschaufel (9) mit einer Umfangsgeschwindigkeit von 35 bis 45 m/sec, vorzugsweise etwa 41 m/sec umläuft, und daß der aufrechte Abwurfwinkel (α) zumindest des äußeren Bereiches (9'') der längeren Wurfschaufeln (9) 10 bis 30°, vorzugsweise etwa 22° zur Horizontalen (H) beträgt.

3. Schleuderstreuer nach Anspruch 1 oder 2, dadurch gekennzeichnet, daß die Schleuderscheibenantriebswellen (6) in einem Abstand (A) von 1,20 bis 1,80 m, vorzugsweise 1,50 m angeordnet sind.
